# EUROPEAN PATENT SPECIFICATION

(11) **EP 2 630 528 B1**
(45) Date of publication and mention of the grant of the patent: **05.04.2023**
(21) Application number: 10858764.3
(22) Date of filing: 22.10.2010
(51) Int. Cl.: G02B 6/02, C03B 37/012, G02B 6/028, H01S 3/067, G02B 6/26

(54) **FIBER WITH ASYMMETRICAL CORE AND METHOD FOR MANUFACTURING SAME**
FASER MIT ASYMMETRISCHEM KERN UND HERSTELLUNGSVERFAHREN DAFÜR
FIBRE À C UR ASYMÉTRIQUE ET PROCÉDÉ POUR SA FABRICATION

(43) Date of publication of application: 28.08.2013
(73) Proprietor: IPG Photonics Corporation, Oxford, Massachusetts 01540 (US)
(72) Inventor: GAPONTSEV, Valentin, Oxford, MA 01540 (US); MYASNIKOV, Dan, Moscow 141190 (RU); ZAYTSEV, Ilia, Oxford, MA 01540 (US); SERGUEEV, Vladimir, Oxford, MA 01540 (US); VYATKIN, Michael, Oxford, MA 01540 (US)
(74) Representative: Kohlmann, Kai
(86) International application number: PCT/US2010/053646
(87) International publication number: WO 2012/054047

(56) References cited:
- JP-U- S5 869 804
- JP-U- S58 105 503
- US-A- 4 742 318
- US-A1- 2002 162 361
- US-A1- 2004 258 379
- US-A1- 2008 141 725
- US-A1- 2009 041 061
- US-A1- 2009 092 157
- US-A1- 2010 135 339
- US-B1- 6 904 219

## Description

### BACKGROUND OF THE DISCLOSURE

### Filed of the Disclosure

The disclosure relates to an optical fiber configured with a noncircular core which is structured to minimize the reduction of the effective area of the fundamental mode along curved stretches of the fiber.

### Prior Art Discussion

The advent of high power fiber laser systems would not be possible without large mode area (LMA) active fibers. As the power scaling of fiber laser systems grows, strict requirements are applied to the quality of lased radiation. As known to an ordinary skilled worker in the art ("posita"), the fewer the modes guided along the core, the higher the light quality. Hence great efforts are made to configure MM fibers capable of supporting substantially a single, nearly diffraction-limited fundamental mode at the desired wavelength. Once the latter is properly exited, the MM core guides this mode further down a light path without substantial distortion. The latter is largely correct in the context of substantially straight fibers. In practice, however, fibers typically have bends or curved stretches.

Typically for standard fibers, such as fibers with a step-index profile of the core, when a fundamental mode propagates along a curved stretch, its effective area, i.e., a quantitative measure of the area which a mode effectively covers in the transverse dimension, decreases. The displacement of the fundamental mode towards the periphery of the core causes an overlapped area, i.e., the area common to a core region with gain medium and fundamental mode, to shrink. At the same time, the displacement of high order modes towards the core periphery along the bend is not as great as in the case of the fundamental mode. A relatively insignificant displacement of high order modes (HOMs) towards the core periphery along the bend may cause the amplification of the HOM to be substantially greater than the amplification of these modes along the straight stretch of the core. The greater the amplification of HOMs, the lower the quality of the output beam.

As the core area increases, the above disclosed effects become more and more pronounced. These phenomena appear to be one of the main factors limiting the enlargement of the core area and, therefore, the power scaling of active fibers with a step index profile and core diameters at least equal to about 30 µm.

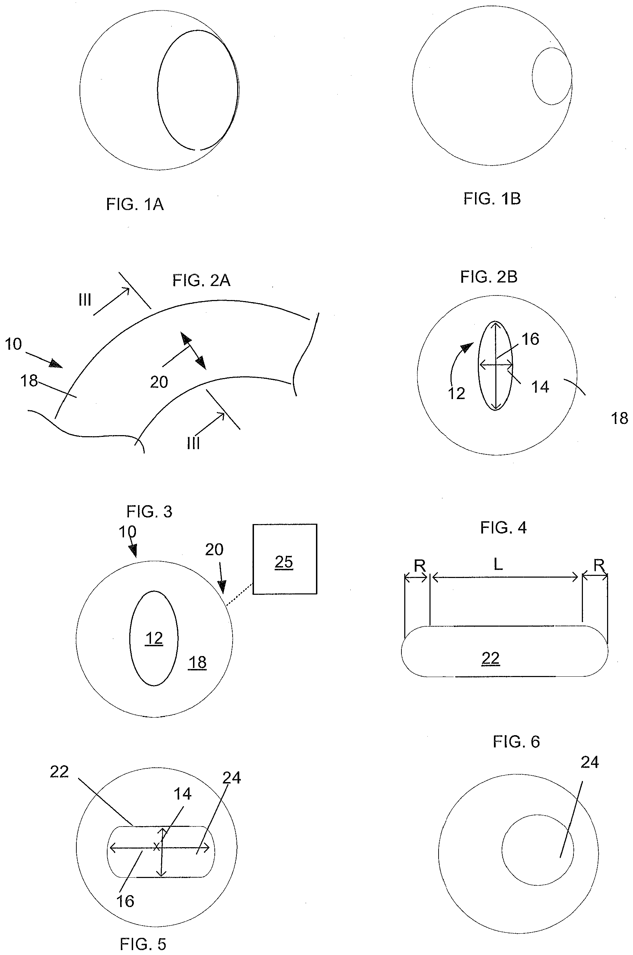

FIGS. 1A and 1B confirm the above. FIG. 1A illustrates the fundamental mode displacement in a 32 um core extending along a 9 cm radius; FIG. 1B shows the displacement of the mode in a 110 um core along a 15 cm radius. Clearly, the greater the core diameter, the greater the mode distortion.

The methods of fiber manufacturing and fiber configurations minimizing the bend-induced mode distortion are known. One of the known structures is configured with a parabolic refractive index profile providing for less reduction of the mode area along a fiber bend than that one of the step-index. Also known fiber configurations operating not with a fundamental mode, but with one of higher order modes which each have Δneff- the difference between refractive indices of respective core and mode - higher than that one for the fundamental mode. The higher modes thus are not as susceptible to fiber bends as the fundamental mode is.
US 2009/041061 A1 discloses a fiber including a thin, doped core. The width can exceed the core thickness by a factor greater than 50, buried inside a flexible glass foil. The rectangular fiber core allows for an increase in the core cross-sectional area and therefore output power. The short ends can be considered as a characteristic feature which indicates the orientation of the short axis of core. The optical fiber can be coiled around a cylinder resulting the short end extending in the plane of the bend.
JP S58 69804 U discloses an optical fiber having an elliptical core surrounded by a cladding and a plastic coating. The optical fiber has a marking which indicate the orientation of the short axis of the elliptical core.
US 6 904 219 B1 is a cross section of a flexible planar wave guide wherein the planar core comprises two orthogonal axes of different lengths. The planar wave guide comprises a cladding, a depressed index cladding region, a core region and a low refractive index outer coating. To avoid bend losses along the long axis of the planar wave guide, the planar wave guide is preferentially coiled along the short second axis.

### SUMMARY OF THE DISCLOSURE

The disclosure teaches an optical fiber as defined in claim 1 and a method of manufacturing an active fiber as defined in claim 6.

The disclosed fiber is based on the relationship between a parameter S, indicating the degree of the mode distortion, and a radius of core. The relationship can be approximated as follows (see: J. M. Fini "Design of LMA amplifier fibers resistant to bend-induced distortion", Vol. 24, No.8/Augusy/2007, Journal of Optical Society of America).

Δnbend = ncore * Rcore/Rbend, where Δnbend is the difference between refractive indices of respective opposite peripheral segments of the core as a result of the bend, Rcore is the core radius and Rbend is the bend radius of fiber;

Δneff = ncore - neff, where Δneff is the difference between refractive indices of respective mode and core;

Based on the foregoing, when Δneff < Δnbend, the fundamental mode is displaced which is associated with the appearance of the outer core region (i.e., the region opposite to the direction of the shift or the one relative to the center of the bend).

The parameter of distortion S = Δnbend/ Δneff

Since Δneff - C*(l/Rcore)², S is proportional to R³_{core}. Thus, the smaller the radius, the smaller the distortion.

According to the disclosure, an active fiber is provided with the core which has a noncircular configuration characterized by differently dimensioned axes. To minimize the mode distortion along a bend, the fiber is positioned so that its smallest axis lies in the plane of the bend. The outer cladding of the disclosed fiber is appropriately marked so that the orientation of the short axis is clear for proper spooling and further installation.

### BRIEF DESCRIPTION OF THE DRAWINGS

The disclosure is further described in detail illustrated by the following drawings.
FIGS. 1A and 1B illustrate the behavior of the mode in a circularly-shaped core of fiber not being part of the present invention extending along bends with respective smaller and larger radii.
FIGs. 2A and 2B illustrate elevation side and cross-sectional views, respectively, of an exemplary elliptically shaped asymmetrical core configured in accordance with the disclosure.
FIG. 3 illustrates a technique of marking the cladding of the disclosed fiber with insignia indicating the direction of the short axis of the asymmetrical core of FIG. 2B.
FIGS. 4 illustrate a modification of the asymmetrical core of the disclosed fiber.
FIG. 5 illustrates distortion of the mode supported by the core of FIG. 6 when the short axis of the core lies in the plane of a bend.
FIG. 6 illustrates distortion of the mode supported by the core of FIG. 6 when the short axis of the asymmetrical core lies in the plane perpendicular to that one of the bend.
FIG. 7 is a graph illustrating the dependence of the degree of the mode area distortion from the bend radius for two bend planes of respective FIGs. 5 and 6.
FIGs. 8 and 9 illustrate further exemplary respective shapes of the asymmetrical core of the disclosed fiber.
FIG. 10A and 10B illustrate an exemplary technique used in the disclosed process of manufacturing of the disclosed asymmetrical core.
FIG. 11 illustrates one of the stages of the disclosed process.
FIG. 12 is a fiber laser system not being part of the present invention incorporating the disclosed fiber.
FIG. 13 is a view of the bottom half of the housing enclosing the system not being part of the present invention shown in FIG. 12.
FIG. 14 illustrates configurations of respective passive and active fibers of the system of FIG. 12.
FIG. 15 illustrates a further modification of the disclosed fiber.

### SPECIFIC DESCRIPTION

Reference will now be made in detail to the disclosed system. Wherever possible, same or similar reference numerals are used in the drawings and the description to refer to the same or like parts or steps. The directional terms including, but not limited to such words as up, down and the like are to be interpreted exclusively with respect to the plane of the sheet. The drawings are in simplified form and far from precise scale.

FIGs. 2A and 2B illustrate one of many possible configurations disclosed LMA fiber 10. The fiber 10 includes one or more claddings 18 (only one is shown), and a MM core 12 surrounded by the claddings and doped with one or a combination of rare-earth elements. The multimode core 12 is configured to support a single, preferably fundamental transverse or very few modes at the desired wavelength. As shown from the illustrated example of the disclosed fiber, core 12 has an elliptical shaped cross-section. The fiber 10 may or may not be polarization maintaining fiber; the fiber is an active fiber.

The multimode elliptical core 12 is configured with a short axis 14 and a long axis 16 (FIG. 2B). In accordance with the disclosure, active fiber 10 with asymmetrically-shaped core 12 is positioned along a bend so that short axis 14 extends along the plane and in the plane of the bend.

FIG. 3 illustrates one of techniques providing the user with a simple and effective structure for proper positioning of fiber 10 along a bend. In particular, during the drawing step of the disclosed manufacturing process, outer cladding 18 is provided with a marking 20, also seen in FIG. 2A, indicating the orientation of the short axis 14. This can be easily realized by applying paint to the cladding along the desired direction from a paint reservoir 25.

FIG. 4 illustrates a slightly modified core 22 provided with opposite curved stretches each with a radius R, and two rectilinear stretches each having a length L and bridging the curved stretches. The fundamental mode in core 22, like in core 12 of FIG.3, is elongated along the long axis.

FIGS. 5 and 6 illustrate the mode shape change in core 22 of FIG. 4. Since core 22 is asymmetrical, the mode behavior depends on the plane in which the bend extends. In FIG. 5, the center of the bend lies on short axis 14, i.e., the fiber is curved along a short axis which lies in the plane of the bend. The mode 24 substantially preserves its shape and is only slightly displaced relative to the center of core 22. In contrast, when the bend extends in the plane of long axis 16, as shown in FIG. 6, the distortion of the mode is clearly manifested by the reduced mode area and the shift of the mode towards the circumference from the center of core 22.

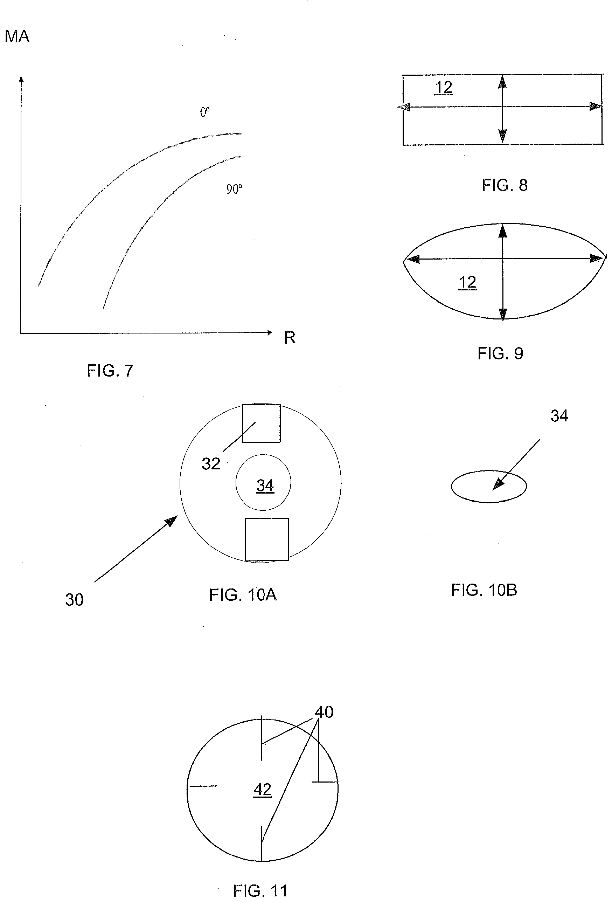

FIG. 7 illustrates the dependence of the mode area from the bend radius for two different bend planes: 0 degrees and 90 degrees. The 0-degree graph clearly shows greater mode distortion.

Referring to FIGs. 8 and 9, the core shape and therefore mode intensity profile is not limited to the elliptical shape and can be manufactured with any regular shape or irregular shape. The regular shape may be, for example, a polygonal shape which without limitation includes triangular, rectangular, star-like and etc. FIG. 8 illustrates an example of polygonal shape represented by a rectangular. FIG. 9 illustrates an example of irregular shape including two rectilinear sides bridged by inwardly curved sides. The criticality of the core's geometry in accordance with the disclosure is the presence of multiple axes with one of the them being the smallest. In general, the core shape is a function of the number of cuts through a preform, the depth and direction at which the cuts extend and process temperature.

FIGs. 10A and 10B schematically illustrate the method of manufacturing fiber 10 having elliptical core 12. A preform 30 (FIG. 10A) is provided with diametrically opposite cuts 32. As the fiber being drawn, a round core 34 accepts an elliptical shape of core shown in FIG. 10B.

FIG. 11 illustrates a technique for configuring a rectangular core. To receive the latter, two pairs of cuts each including a pair of diametrically opposite and differently- dimensioned indents 40, is made in a preform 42. In general, the cuts may or may not be uniform and may be positioned diametrically asymmetrically, have different depth and direction all depending on the desired core shape.

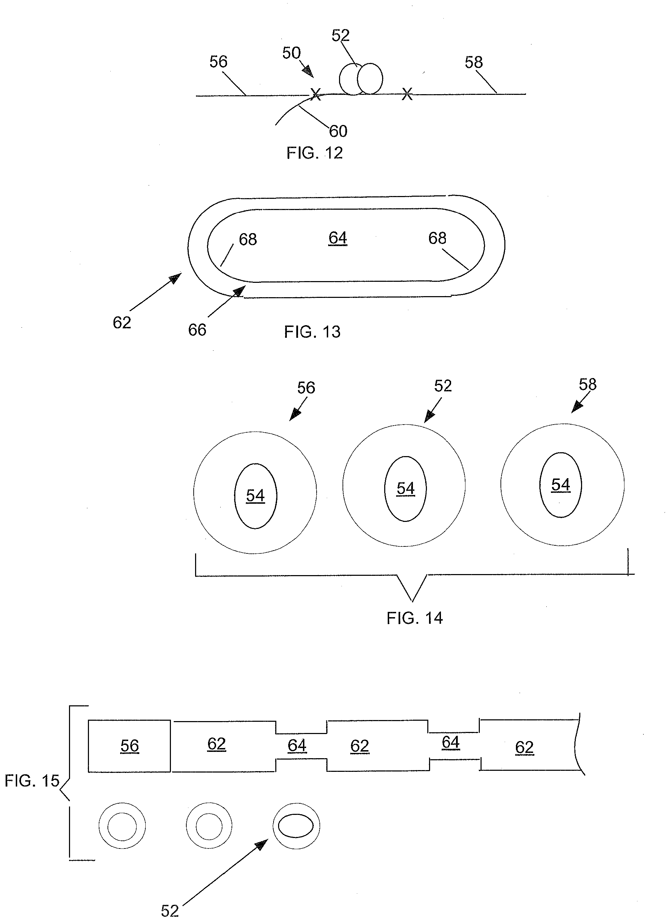

FIG. 12 illustrates a fiber laser system 50 not being part of the present invention provided with a large mode area fiber 52 which is configured with a multimode (MM) core doped with one or more rare earth elements and having, for example, an elliptically-shaped cross-section. The laser system 50 further may include input and output passive fibers 56 and 58, respectively which support propagation of a fundamental mode. The passive fibers each may have a single mode or multimode structure; if the passive fiber is configured as a multimode fiber, substantially only a fundamental mode is excited at the input of such a fiber. Completing system 50 is a passive MM delivery fiber 60 launching pump light into active fiber 52 in accordance with a side pump scheme.

FIG. 13 diagrammatically illustrates a bottom 64 of a fiber block's housing 62 not being part of the present invention. While fiber block 62 may a variety of shapes, the illustrated one has an elliptical shape. The bottom 64 is provided with a guide 66 configured to receive and guide active fiber 52 of FIG. 12 along a path having two bends 68. The active fiber thus has two curved stretches corresponding to the opposite bends 68 of guide 66. In accordance with the disclosure of the invention, the active fiber is provided with an asymmetrically shaped core and extends along the bends so that the shortest axis of the core extends along the curved segment of each bends 68.

With the proliferation of high-power fiber lasers, strict requirements are often applied to the quality and power of output light. To prevent unacceptable power loss of signal light launched from input fiber 56 into MM core 54 and excitement of high order modes in the latter, it is necessary that a mode field diameter of fundamental mode of active fiber 52 substantially match that one of input fiber 56. These can be attained by two following configurations, wherein the first configuration referring to Figs. 12 and 14 is not according to the invention and is present for illustration purposes only.

Referring to FIG. 14 and considering the latter in light of FIG. 12, passive input and output fibers 56, 58, respectively, each are configured with substantially uniform elliptical preferably, but not necessarily, SM core 54. Accordingly, when passive and active fibers are butt-spliced, the respective cores are aligned which allows for the excitement of substantially only a fundamental mode in active fiber 52. FIG. 15, discussed in conjunction with FIG. 12, illustrates the other configuration providing for minimal light losses. In particular, the active fiber 52 according to the invention is drawn with alternating regions 62, 64, respectively, having different core profiles. The region 62 has a typical circular core, whereas region 64 is configured with an asymmetrically-shaped core and insignia on the outer periphery which indicates the correct orientation of the core's short axis. The circular cores of respective input and output regions 62 each are shaped and dimensioned so that a MFD of SM signal light supported by input passive fiber 56 (FIG. 12) substantially matches that one of the fundamental mode of active fiber 52. Similarly, a SM passive output fiber 58 is configured so that the circularly-profiled fundamental mode propagating through a butt-splice region between these fibers does not loose any substantial power. The active fiber 52 is further so configured that it has a transitional region between regions 62 and 64 along which the circular profile transform into the elliptical one and back to the circular one.

Although shown and described is what is believed to be the most practical and preferred embodiments, it is apparent that departures from specific designs and methods described and shown will suggest themselves to those skilled in the art and may be used without departing from the scope of the invention. The present invention is not restricted to the particular constructions described and illustrated, but should be construed to cohere with all modifications that may fall within the scope of the appended claims.

## Claims

1. An optical active (10, 52) fiber comprising:
- a plurality of core stretches (62, 64), the core stretches (62, 64) having respective asymmetrical and symmetrically shapes which alternate each other,
- wherein each stretch (64) of an asymmetrically-shaped core (12) has at least one long axis (16) and a short axis (14) smaller than the long axis (16) and extending transversely thereto,
- wherein each stretch (62) of symmetrically-shaped core has a circular core profile,
- and an outmost cladding (18) surrounding the core (12) and having a marking (20) which indicates the orientation of the short axis (14).

2. The fiber of claim 1, wherein the short axis (14) extends along and is coplanar with a bend region of at least one stretch (64).

3. The fiber of claim 1, wherein the core (12) is not doped with or doped with one or more rare-earth ions and configured to support multiple modes in a range of wavelengths except for one desired wavelength at which the core supports substantially a fundamental or very few modes.

4. The optical fiber of claim 1 further comprising at least one additional cladding concentric with the core (12) and outmost cladding (18), the core and claddings being configured to define a large mode area (LMA) fiber configuration.

5. The optical fiber of claim 4, wherein the LMA fiber configuration includes a polarization maintaining or not polarization maintaining structure.

6. A method of manufacturing an active fiber comprising
(a) drawing a plurality of alternating one and additional fiber stretches (62, 64),
(b) drawing the one stretches (64) of the fiber (12, 52) with an asymmetrically shaped core (12) doped with one or more rare-earth ions, thereby configuring the core (12) with multiple axes (14, 16) one of which is a shortest axis (14); and
(c) simultaneously with (b), marking an outmost cladding (18) of the fiber surrounding the core (12) so as to indicate the orientation of the shortest axis (14) and
(d) drawing the additional stretches (62) having a core with a circular shape and
(e) color-coding beginning and end of each one stretch (64) or each additional stretch (62).

7. The method of claim 6 further comprising providing a plurality of cuts (32) on a preform (30) before drawing the fiber, the cuts (32) being:
spaced from one another at a uniform or varying angular distance,
extending relative to one another at a uniform angle or varying angle.

8. The method of claim 7 further comprising bending the fiber, thereby forming a bend having a plane, wherein the shortest axis (14) extends along and lies in the plane of the bend.

## Patentansprüche

1. Optische aktive (10, 52) Faser, die Folgendes umfasst:
- mehrere Kernabschnitte (62, 64), wobei die Kernabschnitte (62, 64) asymmetrische bzw. symmetrische Formen aufweisen, die sich miteinander abwechseln,
- wobei jeder Abschnitt (64) eines asymmetrischen Kerns (12) zumindest eine Längsachse (16) und eine kurze Achse (14) aufweist, die kleiner als die Längsachse (16) ist und sich quer zu dieser erstreckt,
- wobei jeder Abschnitt (62) eines symmetrischen Kerns ein rundes Kernprofil aufweist,
- und eine äußerste Ummantelung (18), die den Kern (12) umgibt und eine Markierung (20) aufweist, die die Ausrichtung der kurzen Achse (14) anzeigt.

2. Faser nach Anspruch 1, wobei sich die kurze Achse (14) entlang eines Biegungsbereichs zumindest eines Abschnitts (64) erstreckt und komplanar mit diesem ist.

3. Faser nach Anspruch 1, wobei der Kern (12) nicht dotiert ist oder mit einem oder mehreren Seltenerde-Ionen dotiert ist und konfiguriert ist, mehrere Moden in einer Spanne von Wellenlängen außer einer gewünschten Wellenlänge, bei der der Kern im Wesentlichen eine Grundmode oder sehr wenige Moden unterstützt, zu unterstützen.

4. Optische Faser nach Anspruch 1, weiter umfassend zumindest eine zusätzliche Ummantelung, die mit dem Kern (12) und der äußersten Ummantelung (18) konzentrisch ist, wobei der Kern und die Ummantelungen konfiguriert sind, eine Faserkonfiguration mit großem Modenbereich (LMA-Faserkonfiguration, "Large Mode Area") zu definieren.

5. Optische Faser nach Anspruch 4, wobei die LMA-Faserkonfiguration eine polarisationsbeibehaltende oder nicht-polarisationsbeibehaltende Struktur aufweist.

6. Herstellungsverfahren einer aktiven Faser, umfassend
(a) Ziehen mehrerer abwechselnder und zusätzlicher Faserabschnitte (62, 64),
(b) Ziehen der einen Abschnitte (64) der Faser (12, 52) mit einem asymmetrischen Kern (12), der mit einem oder mehreren Seltenerde-Ionen dotiert ist, wodurch der Kern (12) mit mehreren Achsen (14, 16) konfiguriert wird, von denen eine eine kürzeste Achse (14) ist; und
(c) gleichzeitig mit (b), Markieren einer äußersten Ummantelung (18) der Faser, die den Kern (12) umgibt, um die Ausrichtung der kürzesten Achse (14) anzugeben, und
(d) Ziehen der zusätzlichen Abschnitte (62), die einen Kern mit einer runden Form aufweisen, und
(e) Farbcodieren vom Anfang und Ende jedes einzelnen Abschnitts (64) oder jedes zusätzlichen Abschnitts (62).

7. Verfahren nach Anspruch 6, weiter umfassend Bereitstellen mehrerer Schnitte (32) auf einer Vorform (30), bevor die Faser gezogen wird, wobei die Schnitte (32):
voneinander um einen einheitlichen oder variierenden Winkelabstand beabstandet sind,
sich relativ zueinander bei einem einheitlichen Winkel oder einem variierenden Winkel erstrecken.

8. Verfahren nach Anspruch 7, weiter umfassend Biegen der Faser, wodurch eine Biegung gebildet wird, die eine Ebene aufweist, wobei sich die kürzeste Achse (14) entlang der Ebene der Biegung erstreckt und darin liegt.

## Revendications

1. Fibre optique active (10, 52) comprenant :
- une pluralité de tronçons d'âme (62, 64), les tronçons d'âme (62, 64) ayant des formes asymétrique et symétrique respectives en alternance l'une avec l'autre,
- dans laquelle chaque tronçon (64) d'une âme de forme asymétrique (12) a au moins un axe long (16) et un axe court (14) plus petit que l'axe long et s'étendant transversalement par rapport à celui-ci,
- dans laquelle chaque tronçon (62) d'une âme de forme symétrique a un profil d'âme circulaire,
- et une gaine la plus extérieure (18) entourant l'âme (12) et ayant un marquage (20) qui indique l'orientation de l'axe court (14).

2. Fibre selon la revendication 1, dans laquelle l'axe court (14) s'étend le long de et est coplanaire avec une région de courbure d'au moins un tronçon (64).

3. Fibre selon la revendication 1, dans laquelle l'âme (12) n'est pas dopée avec ou est dopée avec un ou plusieurs ions de terres rares et est configurée pour prendre en charge de multiples modes dans une plage de longueurs d'onde à l'exception d'une longueur d'onde souhaitée à laquelle l'âme prend en charge sensiblement un mode fondamental ou très peu de modes.

4. Fibre selon la revendication 1, comprenant en outre au moins une gaine supplémentaire concentrique avec l'âme (12) et la gaine la plus extérieure (18), l'âme et les gaines étant configurées pour définir une configuration de fibre de grande surface modale (LMA).

5. Fibre selon la revendication 4, dans laquelle la configuration de fibre LMA inclut une structure avec maintien de polarisation ou sans maintien de polarisation.

6. Procédé de fabrication d'une fibre active comprenant
(a) l'étirage d'une pluralité de tronçons unitaires et supplémentaires de fibre (62, 64) en alternance,
(b) l'étirage des tronçons unitaires (64) de la fibre (12, 52) avec une âme de forme asymétrique (12) dopée avec un ou plusieurs ions de terres rares, en configurant de ce fait l'âme (12) avec des axes multiples (14, 16) dont l'un est un axe le plus court (14) ; et
(c) simultanément avec (b), le marquage d'une gaine la plus extérieure (18) de la fibre entourant l'âme (12) de manière à indiquer l'orientation de l'axe le plus court (14) et
(d) l'étirage des tronçons supplémentaires (62) ayant une âme de forme circulaire et
(e) le codage couleur du début et de la fin de chaque tronçon unitaire (64) ou de chaque tronçon supplémentaire (62).

7. Procédé selon la revendication 6, comprenant en outre la fourniture d'une pluralité de coupures (32) sur une préforme (30) avant l'étirage de la fibre, les coupures (32) étant :
espacées les unes des autres d'une distance angulaire uniforme ou variable,
étendues les unes par rapport aux autres à un angle uniforme ou variable.

8. Procédé selon la revendication 7, comprenant en outre le cintrage de la fibre, en formant de ce fait une courbure ayant un plan, dans lequel l'axe le plus court (14) s'étend le long du plan de la courbure et se trouve dans celui-ci.
